(19) Europäisches Patentamt
European Patent Office
Office européen des brevets

(11) **EP 3 620 760 B1**

(12) **EUROPÄISCHE PATENTSCHRIFT**

(45) Veröffentlichungstag und Bekanntmachung des Hinweises auf die Patenterteilung:
**04.11.2020 Patentblatt 2020/45**

(51) Int Cl.:
*G01G 19/414* (2006.01)     *G01G 19/42* (2006.01)
*G06Q 10/08* (2012.01)     *G07G 1/00* (2006.01)
*G06Q 20/20* (2012.01)

(21) Anmeldenummer: **18000719.7**

(22) Anmeldetag: **06.09.2018**

(54) **VERKAUFSEINRICHTUNG MIT INTEGRIERTER BESTANDSÜBERWACHUNG**

SELLING DEVICE WITH INTEGRATED STOCK CONTROL

DISPOSITIF DE VENTE À SURVEILLANCE DE L'INVENTAIRE INTÉGRÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.03.2020 Patentblatt 2020/11**

(73) Patentinhaber: **Bizerba SE & Co. KG**
**72336 Balingen (DE)**

(72) Erfinder: **DRISSNER, Jörg**
**D-72336 Balingen (DE)**

(74) Vertreter: **Huber, Meik**
**Bizerba SE & Co. KG**
**PF 18/1**
**Wilhelm-Kraut-Straße 65**
**72336 Balingen (DE)**

(56) Entgegenhaltungen:
**DE-A1- 10 045 516     DE-A1-102017 001 832**
**JP-A- H04 238 597**

Bemerkungen:
Die Akte enthält technische Angaben, die nach dem Eingang der Anmeldung eingereicht wurden und die nicht in dieser Patentschrift enthalten sind.

EP 3 620 760 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine Verkaufseinrichtung mit integrierter Bestandsüberwachung. Mit der Verkaufseinrichtung werden zum Beispiel in Supermärkten oder in Fachgeschäften Backwaren, Gemüse oder Obst insbesondere zum Selbstbedienverkauf angeboten. Die Verkaufsvorrichtung bestimmt automatisch den in einzelnen Produktbereichen vorhandenen Bestand an Waren. Die Erfindung betrifft ferner ein Verfahren zum Betrieb einer Verkaufseinrichtung.

Die DE 100 45 516 A1 zeigt eine Verkaufstheke für Eis, wobei der Zugriff in einen bestimmten Eisbehälter mittels Lichtschranken ermittelt wird und daraus wird auf die Anzahl verkaufter Eiskugeln pro Sorte zurückgeschlossen. Ebenfalls sind für jeden Eisbehälter Gewichtssensoren vorgesehen, die die Gesamtmasse des Eisbehälters bestimmen.

Das Dokument DE 10 2017 001832 A1 offenbart eine Verkaufseinrichtung gemäß dem Stand der Technik.

Aufgabe der Erfindung ist es eine Verkaufseinrichtung zu schaffen, die den Verkaufsvorgang in einem Ladengeschäft im Selbstbedienungsbereich effizienter gestaltet, und insbesondere den Warenbestand überwacht.

Diese Aufgabe wird durch eine Verkaufseinrichtung nach Anspruch 1 und ein Verfahren zum Betrieb einer Verkaufseinrichtung nach Anspruch 10 gelöst.

Erfindungsgemäß wird eine Verkaufseinrichtung für insbesondere Backwaren, Obst oder Gemüse bestehend aus mindestens einem Auslagebereich vorgeschlagen. Der Auslagebereich wird durch einen starren Körper gebildet. Der Auslagebereich umfasst mindestens zwei räumlich getrennte Produktbereiche. Der starre Körper des Auslagebereichs wird von den Krafteinleitungsbereichen von mindestens zwei Wägezellen gehalten. Die Verkaufseinrichtung umfasst eine Auswerteeinheit, die dazu ausgebildet ist, in periodischen Abständen oder bei einer Änderung des Gesamtgewichts, welches von den mindestens zwei Wägezellen erfasst wird, aus den Daten der Wägezellen neue Schwerpunktskoordinaten zu ermitteln. Die Verkaufseinrichtung umfasst eine Steuereinheit, die dazu ausgebildet ist, basierend auf Änderungen der Schwerpunktskoordinaten einen Produktbereich innerhalb des Auslagebereichs zu ermitteln. Die Steuereinheit ist dazu ausgebildet, aus der Änderung des Gesamtgewichts das Gewicht der in dem ermittelten Produktbereich entnommenen oder zugefügten Waren zu bestimmen und den Warenbestand zu aktualisieren. In einer Ausführungsform handelt es sich bei der Verkaufseinrichtung um eine Verkaufseinrichtung zum Selbstbedienungsverkauf ist. In einer Ausführungsform ist die Verkaufseinrichtung ein Brotregal zum Anbieten von Backwaren in einem Supermarkt, aus dem der Kunde selbst verschiedene Backwaren aus verschiedenen Regalbereichen (Produktbereichen) nehmen und einpacken kann und diese später an der Kasse bezahlt. In einer Ausführungsform ist die Verkaufseinrichtung ein Regal für Obst oder Gemüse, das mehrere Produktbereiche für unterschiedliche Waren umfasst und dem Kunden zum selbständigen Entnehmen und späteren Bezahlen an der Kasse anbietet. Allen diesen Einrichtungen gemein ist, dass nach dem Stand der Technik beim Ausgehen einer bestimmten Ware oder unterschreiten einer Mindeststückzahl, ein Mitarbeiter des Supermarktes darauf durch einen Kunden hingewiesen werden muss oder selbst in regelmäßigen Abständen den Warenbestand prüfen muss, um rechtzeitig die Waren nachzufüllen, die eine gewisse Mindeststückzahl unterschritten haben. Vorteil der Erfindung ist es, dass die Verkaufseinrichtung den Warenbestand automatisch ermittelt. Im Rahmen der Bestandsüberwachung der Verkaufseinrichtung kann dann eine entsprechend verantwortliche Person zum Nachfüllen des Warenbestands durch die Verkaufseinrichtung veranlasst werden.

In einer Ausführungsform umfasst die Verkaufseinrichtung drei oder vier Wägezellen, von denen der starre Körper des Auslagebereichs gehalten wird. Der Fachmann versteht, dass es sich hierbei um drei oder vier Wägezellen pro starren Körper handelt. Umfasst die Verkaufseinrichtung mehr als einen Auslagebereich mit mehr als einem starren Körper, so ist eine entsprechende Anzahl von Wägezellen pro starrem Körper vorhanden.

In einer Ausführungsform ist die Steuereinheit dazu ausgebildet, aus dem Gesamtgewicht der entnommenen oder zugefügten Waren und einem durchschnittlichem Gewicht pro Ware, welches einem Produktbereich zugewiesen ist, eine Anzahl von Waren zu ermitteln, die entnommen oder zugefügt wurden.

In einer Ausführungsform ist die Steuereinheit dazu ausgebildet, den Warenbestand innerhalb jedes Produktbereichs aufgrund der entnommenen oder zugefügten Waren zu aktualisieren.

In einer Ausführungsform werden alle Wägezellen periodisch und gleichzeitig tariert.

In einer Ausführungsform ist die Auswerteeinheit dazu ausgebildet, bei einer Änderung des Gesamtgewichts einen Vektor zwischen den vorhergehenden Schwerpunktkoordinaten und den neuen Schwerpunktkoordinaten zu ermitteln. Die Auswerteeinheit ist dazu ausgebildet einen Produktbereich aus dem Vektor und dem Gesamtgewicht zu ermitteln. Dieser Produktbereich entspricht dem Produktbereich aus dem die Waren entnommen oder zugefügt wurden.

In einer Ausführungsform umfasst die Verkaufseinrichtung einen Speicher, in dem entsprechende Produktinformationen, insbesondere das Gewicht pro Ware/Stück, den Produktbereichen im Auslagebereich zugeordnet sind.

In einer Ausführungsform umfasst die Verkaufseinrichtung eine Kommunikationseinheit, die eine Nachricht schickt oder ausgibt, wenn der Warenbestand in einem Produktbereich einen dem Produktbereich zugeordneten Grenzwert unterschreitet. So kann die Verkaufseinrichtung zum Beispiels mit einem Display oder einer Systemleuchte eine Nachricht ausgeben, die einen Bediener darauf hinweist, dass der Warenbestand eines Produkts zu niedrig ist. Andererseits kann die Verkaufseinrichtung auch mittels Email oder anderer elektronischer Kommunikation eine Nachricht in einen Kontrollraum des Supermarkts schicken, der eine Bedienperson darauf hinweist, dass der Warenbestand eines Produkts zu niedrig ist. Andererseits kann die Verkaufseinrichtung auch eine Nachricht an einen Backofen schicken, die zum Beispiel auf den niedrigen Bestand eines bestimmten Backprodukts hinweist und ggf. automatisch den Backofen zum Backen dieses Backprodukts veranlasst.

Die Erfindung umfasst ferner ein Verfahren zum Betrieb einer Verkaufseinrichtung für insbesondere Backwaren, Obst oder Gemüse. Die Verkaufseinrichtung umfasst einen Auslagebereich, wobei der Auslagebereich durch einen starren Körper gebildet wird und wobei der Auslagebereich mindestens zwei räumlich getrennte Produktbereiche umfasst. Der starre Körper des Auslagebereichs wird von den Krafteinleitungsbereichen von mindestens zwei Wägezellen gehalten. Das Verfahren umfasst den Schritt des Empfangens eines Signals der mindestens zwei, vorzugsweise drei oder vier Wägezellen, wobei die Signale den Gewichtskräften im Bereich der Ecken des starren Körpers entsprechen. Das Verfahren umfasst ferner den Schritt des Ermittelns mit einer Auswerteeinheit von Schwerpunktkoordinaten und einer Gesamtgewichtskraft aus den empfangenen Signalen. Das Verfahren umfasst ferner den Schritt des Empfangens eines Signals das einer neuen Gewichtskraft entspricht von mindestens einer Wägezelle und des Ermittelns mit der Auswerteeinheit neuer Schwerpunktkoordinaten aus den von den Wägezellen aktuell empfangenen Daten. Das Verfahren umfasst ferner den Schritt des Ermittelns eines Produktbereichs und eines Gewichts von aus dem Produktbereich entnommenen oder zugefügten Waren. Das Verfahren umfasst ferner den Schritt des Aktualisierens des Warenbestands, der jedem Produktbereich zugewiesen ist.

In einer Ausführungsform umfasst das Verfahren den Schritt des periodischen Tarierens aller Wägezellen. Des Weiteren umfasst das Verfahren bei einer Änderung des von mindestens einer Wägezelle gemessenen Gewichts, den Schritt des Ermittelns von neuen Schwerpunktkoordinaten und eines neuen Gesamtgewichts mit den neuen Wägedaten.

In einer Ausführungsform umfasst das Verfahren bei einer Änderung des von mindestens einer Wägezelle gemessenen Gewichts den Schritt des Ermittelns von neuen Schwerpunktkoordinaten mit den neuen Wägedaten und den Schritt des Ermittelns eines Vektors zwischen den vorhergehenden Schwerpunktkoordinaten und den neuen Schwerpunktkoordinaten. Des Weiteren umfasst das Verfahren den Schritt des Zuordnens eines Produktbereichs ausgehend von dem ermittelten Vektor und dem Gesamtgewicht. Des Weiteren umfasst das Verfahren den Schritt des Bestimmens des Gewichts der entnommen oder zugefügten Waren aus dem zugeordneten Produktbereich. Des Weiteren umfasst das Verfahren den Schritt des Bestimmens einer Anzahl von Waren aufgrund des Gewichts der entnommenen oder zugefügten Waren und einem Gewicht pro Ware/Stück.

In einer Ausführungsform umfasst das Verfahren den Schritt des Vergleichens des aktualisierten Warenbestandes in dem zugeordneten Produktbereich mit einem für den Produktbereich definierten Grenzwert und falls der aktualisierte Warenbestand den Grenzwert unterschreitet, den Schritt des Sendens oder Anzeigens einer Information, dass der Grenzwert unterschritten ist.

Einige Ausführungsformen der Erfindung sind in den Zeichnungen beispielhaft gezeigt und nachfolgend beschrieben. Es zeigen, jeweils in schematischer Darstellung:

Fig. 1     eine erfindungsgemäße Verkaufseinrichtung,

Fig. 2     a und b: ein Blockdiagramm einer erfindungsgemäßen Verkaufseinrichtung in einer ersten und zweiten Ausführungsform,

Fig. 3     ein erfindungsgemäßes Verfahren zum Betrieb einer Verkaufsvorrichtung,

Fig. 4     ein erstes Verfahren zur Bestimmung eines Ortes, an dem ein Produkt entnommen oder zugefügt wurde, und

Fig. 5     ein zweites Verfahren zur Bestimmung eines Ortes, an dem ein Produkt entnommen oder zugefügt wurde.

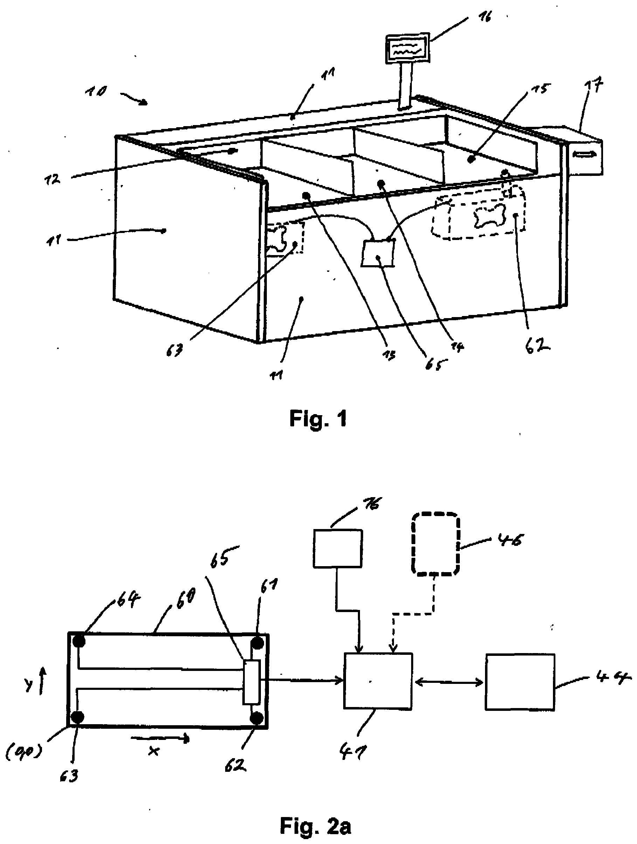

Figur 1 zeigt eine erfindungsgemäße Verkaufseinrichtung 10. Die Verkaufseinrichtung 10 ist geeignet für den Selbstbedienungsverkauf von insbesondere Backwaren, Obst und Gemüse. Die Verkaufseinrichtung 10 besteht aus einer Theke, die einen festen Rahmen 11 und einen Auslagebereich 12 umfasst. Der Auslagebereich 12 umfasst drei Produktbereiche 13, 14, 15, in denen verschiedene Produkte (nicht gezeigt) liegen. Der Kunde kann sich dich Produkte selbst aus den einzelnen Produktbereichen nehmen und verpacken und später an der Kasse bezahlen. Figur 1 zeigt beispielhaft eine Verkaufseinrichtung mit einem Auslagebereich 12, der drei Produktbereiche umfasst. Der Auslagebereich 12 kann jedoch auch eine größere Anzahl von Produktbereichen umfassen, die nebeneinander oder ggf. auch in einer Matrix angeordnet sind. Die Verkaufseinrichtung kann zum Beispiel auch mehrere Auslagebereiche 12 umfassen, die übereinander angeordnet sind, von denen wiederum jeder mehrere Produktbereiche umfasst. Des Weiteren kann jeder Produktbereich auch auf der vorderen Seite geschlossen sein oder zum Beispiel eine Tür umfassen, die vom Kunden geöffnet werden kann, so wie es dem Fachmann zum Beispiel aus Selbstbedienungseinrichtungen zum Brotverkauf bekannt ist. Der Auslagebereich 12 selbst oder zumindest der Boden des Auslagebereichs bildet einen starren Körper. So kann zum Beispiel der Auslagebereich selbst aus einem starren Platte bestehen oder auf einem starren Rahmen montiert sein. Der starre Körper des Auslagebereichs wird von vier Wägezellen 61, 62, 63, 64, die jeweils nahe dessen Ecken angebracht sind, abgestützt, wovon in Figur 1 sind nur die beiden vorderen Wägezellen 62, 63 gezeigt sind. Der starre Körper ist jeweils mit den Krafteinleitungsbereichen der Wägezellen 61, 62, 63, 64 verbunden. Die feststehenden Seiten der Wägezellen 61, 62, 63, 64 sind jeweils mechanisch fest mit dem Rahmen 11 der Verkaufseinrichtung verbunden. Die Wägezellen 61, 62, 63, 64 sind mit Ihren Signalausgängen mit einer Auswerteeinheit 65 verbunden. Der Rahmen 11 der Verkaufseinrichtung trägt ein Display 16, auf welchem der Warenbestand in den jeweiligen Produktbereichen angegeben wird und das zur Bedienung der Verkaufseinrichtung dient. Das Display ist vorzugsweise als Touchdisplay ausgebildet und kann ebenfalls als lösbarer Tablet-Computer ausgebildet sein. Das Display kann ebenfalls in einem Kontrollraum aufgestellt sein und über ein Netzwerk mit der Verkaufseinrichtung kommunizieren.

Figur 2a zeigt schematisch den Auslagebereich einer erfindungsgemäßen Verkaufseinrichtung 10 und die entsprechenden Komponenten zur Bestandsüberwachung. Die Bestimmung des Produktbereichs, aus dem ein Produkt entnommen oder zugefügt wurde, erfolgt mittels Schwerpunktermittlung des starren Körpers 60, der den Auslagebereich 12 bildet.

Der starre Körper 60 wird von vier Wägezellen 61, 62, 63, 64 schwebend gehalten. Die Wägezellen 61, 62, 63, 64 stützen mit ihren Krafteinleitungsseiten den starren Körper 60 an seinen Ecken oder in der Nähe der Ecken. Die Wägezellen 61, 62, 63, 64 bestimmen unabhängig voneinander eine wirkende Gewichtskraft, die durch den starren Körper 60 und der in den Produktbereichen abgelegten Produkte entsteht. Dabei wirkt auf jede Wägezelle 61, 62, 63, 64 anteilig von dem Gesamtgewicht eine einzelne Gewichtskraft. Die Daten aus den Wägezellen 61, 62, 63, 64 werden an eine Auswerteeinheit 65 übermittelt. Die Auswerteeinheit bestimmt aus den einzelnen Gewichtsdaten der Wägezellen 61, 62, 63, 64 Schwerpunktkoordinaten des starren Körpers 60. Die Koordinaten im Auslagebereich 12 beginnen in einer Ecke bei der Wägezelle 63 mit den Koordinaten (0, 0) und erstrecken sich in waagrechter Richtung X und in senkrechter Richtung Y.

Zur Veranschaulichung der Schwerpunktsermittlung werden den Wägezellen 61, 62, 63, 64 wie in Figur 2a dargestellt die entsprechenden Gewichtsdaten W61, W62, W63, W64 zugewiesen.

Die Bildung des Schwerpunkts in X Richtung bestimmt sich wie folgt:

$$(W61 + W62) \, / \, ( \, W61 + W62 + W63 + W64 \, )$$

Die Bildung des Schwerpunkts in Y Richtung bestimmt sich wie folgt:

$$(W61 + W64) \, / \, ( \, W61 + W62 + W63 + W64 \, )$$

Mit einem entsprechenden Normierungsfaktor, der die Größe des starren Körpers 60 berücksichtigt, sind Koordinaten im Auslagebereich bestimmbar, die den Schwerpunktkoordinaten des starren Körpers entsprechen. Diese Koordinaten werden in der Auswerteeinheit 65 auf Basis der Daten der Wägezellen 61, 62, 63, 64 ermittelt. Des Weiteren bildet die Auswerteeinheit 65 ein Gesamtgewicht W61 + W62 + W63 + W64. Die Schwerpunktkoordinaten und das Gesamtgewicht werden von der Auswerteeinheit 65 an eine Steuereinrichtung 41 übermittelt. Die Verkaufseinrichtung umfasst einen Speicher 44, in dem eine Zuordnung zwischen Schwerpunktkoordinaten und Produktbereich 13, 14, 15 abgelegt ist. Im Speicher 44 ist des Weiteren für jeden Produktbereich 13, 14, 15 das durchschnittliche Gewicht eines Stücks einer Ware in diesem Produktbereich abgelegt. Im Speicher 44 ist für jeden Produktbereich 13, 14, 15 der aktuelle Warenbestand, das heißt die aktuelle Anzahl von Waren/Stück in diesem Produktbereich 13, 14, 15 gespeichert. Mit dieser Anordnung sind neben den in Figur 1 gezeigten Produktbereichen 13, 14, 15, die nebeneinander in X Richtung angeordnet sind, auch Produktbereiche zu ermitteln, die in X und Y Richtung in Reihen und Spalten, also in einer Matrix, angeordnet sind.

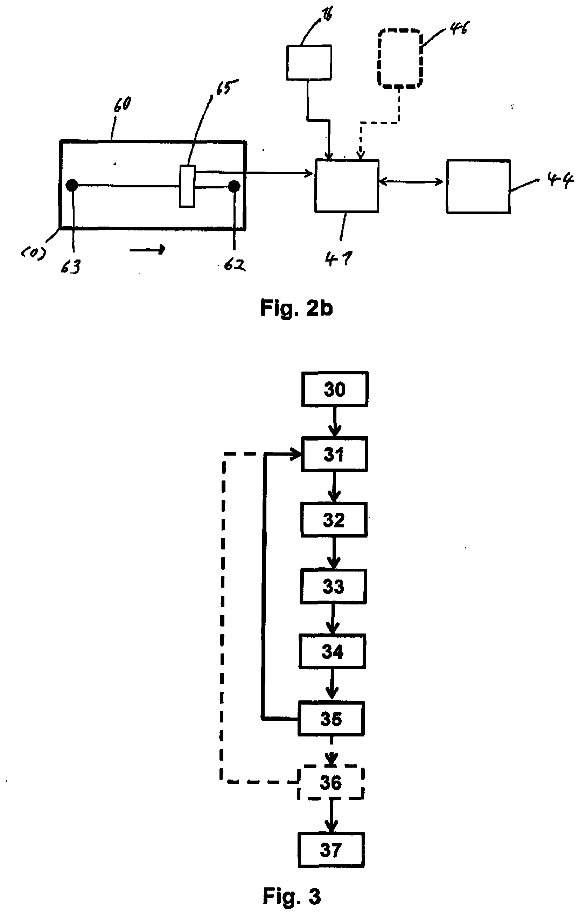

Figur 2b zeigt ein System mit zwei Wägezellen 62, 63, mit dem nur die Bestimmung eines Produktbereichs in X Richtung möglich ist.

Die Bildung des Schwerpunkts in X Richtung bestimmt sich wie folgt:

$$(W62) \, / \, ( \, W62 + W63 \, )$$

Für eine Verkaufseinrichtung wie in Figur 1 gezeigt, bei dem die Produktbereiche 13, 14, 15 in X Richtung nebeneinander angeordnet sind, ist so ein System ausreichend.

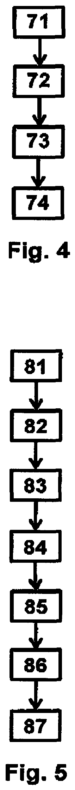

Figur 3 zeigt ein Verfahren zum Betrieb einer Verkaufseinrichtung für insbesondere Backwaren, Obst oder Gemüse. In Schritt 30 werden die Produktbereiche 13, 14, 15 im Auslagebereich 12 der Verkaufseinrichtung mit Waren bestückt. Dabei wird im Speicher jedem Produktbereich 13, 14, 15 die Ware zugewiesen und ein Gewicht pro Stück abgespeichert. Dabei handelt es sich um das durchschnittliche Gewicht pro Stück, da das Gewicht zum Beispiel von Backwaren leicht voneinander abweichen kann. Die Abweichungen befinden sich jedoch in einem Bereich und sind statistisch so verteilt, dass sie für das Verfahren keine Rolle spielen. Des Weiteren wird im Speicher 44 für jeden Produktbereich 13, 14, 15 die Anzahl von Waren abgelegt, die sich nach dem Befüllen der Verkaufseinrichtung im Produktbereich befinden. Des Weiteren sind im Speicher 44 die S und Y Koordinaten jedes Produktbereichs 13, 14, 15 hinterlegt. Diese müssen nicht bei jedem Befüllen neu hinterlegt werden, da sie sich nicht ändern. Wird jedoch die Größe der Produktbereiche und deren Anordnung durch eine Neuanordnung der Zwischenwände geändert, so muss im Speicher die Zuordnung zwischen X und Y Koordinaten und Produktbereichen 13, 14, 15 aktualisiert werden. Somit ist im Speicher hinterlegt, über welche X und Y Koordinaten sich jeder Produktbereich 13, 14, 15 erstreckt. Des Weiteren ist im Speicher 44 ein Grenzwert für jeden Produktbereich hinterlegt, bei dessen Unterschreitung die Verkaufseinrichtung eine Nachricht ausgeben soll, dass neue Waren in diesem Produktbereich 13, 14, 15 aufgefüllt werden müssen. In Schritt 31 wird mittels einer Auswerteeinheit 65 aus den Gewichtswerten der Wägezellen 61, 62, 63, 64 ein Ort bestimmt, an dem eine Ware oder Waren entnommen oder zugefügt wurden und das Gesamtgewicht der entnommenen oder zugefügten Waren. Die Bestimmung in Schritt 31 kann mit zwei alternative Verfahren ausgeführt werden, die mit Bezug zu Figur 4 und Figur 5 im Folgenden beschrieben sind. In Schritt 32 wird mit der Steuereinrichtung 41 aufgrund der Koordinaten des Orts, an dem etwas entnommen oder zugefügt wurde und mithilfe der Information aus dem Speicher 44 über die Anordnung der Produktbereiche 13, 14, 15, der zugehörige Produktbereich 13, 14, 15 bestimmt. In Schritt 33 wird aus dem bestimmten Gesamtgewicht der entnommenen Waren und dem im Speicher dem Produktbereich 13, 14, 15 zugeordneten Gewichtswert für eine Ware die Anzahl Waren bestimmt, die aus dem Produktbereich 13, 14, 15 entnommen oder zugefügt wurden. Es wird also die Stückzahl der entnommenen Gegenstände bestimmt. In Schritt 34 wird der dem Produktbereich 13, 14, 15 zugeordnete aktuelle Warenbestand um die Anzahl der entnommenen Waren reduziert, ggf. erhöht. Das Verfahren wird dann mit Schritt 30 mit der Entnahme oder dem Zufügen einer weiteren Ware fortgesetzt. Alternativ kann das Verfahren mit dem Schritt 35 fortgesetzt werden, in dem ein Etikett für die letzte oder die letzten entnommenen Waren gedruckt wird. Das Etikett wird zum Beispiel gedruckt, nachdem ein Kunde seine Entnahmen abgeschlossen hat und diese aufsummiert wurden. Das Etikett kann für eine einzige Entnahme gedruckt werden oder als Summenetikett für mehrere Waren aus mehreren Produktbereichen. Das Etikett kann zum Beispiel durch den Kunden auf eine Tüte aufgeklebt werden, in der er seine Waren abgelegt hat und das Etikett kann als Grundlage für den Bezahlvorgang an der Kasse dienen. Nach dem Druck des Etiketts geht das Verfahren mit Schritt 30 weiter. Ist ein im Speicher 44 hinterlegter Grenzwert für den Warenbestand in einem Produktbereich 13, 14, 15 unterschritten, so schickt das Verfahren in Schritt 36 eine Nachricht an einen Bediener, so dass dieser informiert ist, dass der Warenbestand ein niedriges Niveau erreicht hat und aufgefüllt werden muss. Handelt es sich bei der Verkaufseinrichtung um eine Verkaufseinrichtung für Backwaren, so kann die Nachricht auch an einen Backofen geschickt werden, der dann automatisch oder veranlasst durch einen Bediener das entsprechende Produkt bäckt. Zum Beispiel kann die in Schritt 36 gesendete Nachricht einen Backofen automatisch veranlassen vorzuheizen und auf Betriebstemperatur zu kommen und gleichzeitig an ein mobiles Endgerät eines Bedieners geschickt werden um ihn darauf hinzuweisen, dass er den Backofen mit dem entsprechenden Produkt bestücken soll. In Schritt 37 werden durch den Bediener neue Informationen zum Warenbestand eingegeben, wenn er einen Produktbereich mit neuen Waren befüllt hat. Die Informationen im Speicher 44 zum Warenbestand in diesem Produktbereich 13, 14, 15 werden dann entsprechend, durch die Bedienereingabe veranlasst, aktualisiert.

Figur 4 zeigt schematisch ein Verfahren zur Bestimmung eines Ortes im Auslagebereich 12, an dem eine Ware hinzugefügt oder entnommen wurde. In Schritt 71 werden alle Wägezellen 61, 62, 63, 64 tariert, das heißt der starre Körper 60 und alle darauf aufgebrachten Waren werden so behandelt, als wären sie eine Vorlast für die Wägezellen 61, 62, 63, 64 und auf Null gesetzt. In Schritt 72 wird von zumindest einer Wägezellen 61, 62, 63, 64 ein neuer Gewichtswert gemessen und von der Auswerteeinrichtung 65 empfangen. In Schritt 73 berechnet die Auswerteeinrichtung 65 aufgrund der aktuellen Gewichtsdaten der Wägezellen 61, 62, 63, 64 Schwerpunktkoordinaten. Diese Schwerpunktkoordinaten spiegeln nicht den Schwerpunkt des starren Körpers 60 wieder, sondern vielmehr den Schwerpunkt der Gewichtsänderung im Koordinatensystem des Auslagebereichs 12. Dies ist der Ort, an dem eine Ware aus dem Auslagebereich entnommen oder zugefügt wurde. In Schritt 74 wird dieser Ort und die Änderung des Gewichts an die Steuereinrichtung 41 weitergegeben.

Figur 5 zeigt schematisch ein Verfahren zur Bestimmung eines Ortes auf dem Auslagebereich 12, an dem eine Ware hinzugefügt oder entnommen wurde. In Schritt 81 werden Schwerpunktkoordinaten vom aktuellen Schwerpunkt des starren Körpers inklusiver aller Waren die darauf aufgelegt sind ermittelt. Dabei handelt es sich um den echten Schwerpunkt. Der starre Körper oder zumindest die Waren die darauf aufgelegt sind, sind nicht tariert. In Schritt 82 wird von zumindest einer Wägezellen 61, 62, 63, 64 ein neuer Gewichtswert gemessen und von der Auswerteeinrichtung 65 empfangen. In Schritt 83 werden neue Schwerpunktkoordinaten von der Auswerteeinrichtung 65 aus den neuen Daten der Wägezellen 61, 62, 63, 64 bestimmt. In Schritt 84 wird aus den vorhergehenden Schwerpunktkoordinaten und den neuen Scherpunktkoordinaten ein Vektor gebildet, der die Verschiebung der Schwerpunktkoordinaten wiederspiegelt. Ausgehend vom vorhergehenden Schwerpunkt führt der Vektor, wenn er nicht skaliert wird, zum neuen Schwerpunkt. Anschließend wird Schritt 85 der Vektor mit Hilfe des Gesamtgewichts des starren Körpers und der darauf aufgelegten Waren umgekehrt proportional skaliert. Der Ort, an dem ein Produkt aus dem Auslagebereich 12 entnommen wurde oder darauf abgelegt wurde ergibt sich in Schritt 86, indem zu den vorhergehenden Schwerpunktkoordinaten der skalierte Vektor addiert wird. In Schritt 87 wird dieser Ort und die Änderung des Gewichts an die an die Steuereinrichtung 41 weitergegeben.

Die Funktionen verschiedener in den Zeichnungen gezeigter Elemente, inklusive der Funktionsblöcke, können durch dezidierte Hardware oder durch generische Hardware, die in der Lage ist Software auszuführen, im Zusammenhang mit der entsprechenden Software, realisiert werden. Falls die Funktionen mittels eines Prozessors zur Verfügung gestellt werden, können sie durch einen einzigen dezidierten Prozessor, einen einzigen geteilten Prozessor oder mehrere generische Prozessoren, die wiederum geteilt sein können, zur Verfügung gestellt werden. Die Funktionen können, ohne Einschränkung, durch einen digital signal processor (DSP), Netzwerk Prozessor, application specific integrated circuit (ASIC), field programmable gate array (FPGA), read only memory (ROM) mit gespeicherter Software, random access memory (RAM), und nichtflüchtige Speicher zur Verfügung gestellt werden.

## Patentansprüche

1. Verkaufseinrichtung für insbesondere Backwaren, Obst oder Gemüse bestehend aus mindestens einem Auslagebereich (12), wobei der Auslagebereich (12) durch einen starren Körper (60) gebildet wird und wobei der Auslagebereich (12) mindestens zwei räumlich getrennte Produktbereiche (13, 14, 15) umfasst, **dadurch gekennzeichnet, dass** der starre Körper des Auslagebereichs (12) von den Krafteinleitungsbereichen von mindestens zwei Wägezellen (61, 62, 63, 64) gehalten wird, und dass die Verkaufseinrichtung eine Auswerteeinheit (65) umfasst, die in periodischen Abständen oder bei einer Änderung des Gesamtgewichts, welches von den mindestens zwei Wägezellen (61, 62, 63, 64) erfasst wird, aus den Daten der Wägezellen (61, 62, 63, 64) neue Schwerpunktskoordinaten ermittelt und diese an eine Steuereinheit (41) übermittelt, wobei die Steuereinheit (41) basierend auf Änderungen der Schwerpunktskoordinaten einen Produktbereich (13, 14, 15) innerhalb des Auslagebereichs (12) ermittelt, wobei die Steuereinheit (41) aus der Änderung des Gesamtgewichts das Gewicht der in dem ermittelten Produktbereich (13, 14, 15) entnommenen oder zugefügten Waren bestimmt und den in einem Speicher (44) gespeicherten Warenbestand für diesen Produktbereich (13, 14, 15) aktualisiert.

2. Verkaufseinrichtung nach Anspruch 1, **dadurch gekennzeichnet, dass** die Verkaufseinrichtung (10) eine Verkaufseinrichtung zum Selbstbedienungsverkauf ist.

3. Verkaufseinrichtung nach Anspruch 2, **dadurch gekennzeichnet, dass** die Verkaufseinrichtung (10) drei oder vier Wägezellen (61, 62, 63, 64) umfasst, von denen der starre Körper des Auslagebereichs (12) gehalten wird.

4. Verkaufseinrichtung nach einem der Ansprüche 1 bis 3, **dadurch gekennzeichnet, dass** die Steuereinheit (41) aus dem Gesamtgewicht der entnommenen oder zugefügten Waren und einem durchschnittlichem Gewicht pro Ware, welches einem Produktbereich (13, 14, 15) zugewiesen ist, eine Anzahl von Waren ermittelt, die entnommen oder zugefügt wurden.

5. Verkaufseinrichtung nach einem der Ansprüche 1 bis 4, **dadurch gekennzeichnet, dass** die Steuereinheit (41) einen Warenbestand innerhalb jedes Produktbereichs (13, 14, 15) aufgrund der entnommenen oder zugefügten Waren aktualisiert.

6. Verkaufseinrichtung nach einem der Ansprüche 1 bis 4, **dadurch gekennzeichnet, dass** alle Wägezellen (61, 62, 63, 64) periodisch und gleichzeitig tariert werden.

7. Verkaufseinrichtung nach einem der Ansprüche 1 bis 6, **dadurch gekennzeichnet, dass** die Auswerteeinheit (65) bei einer Änderung des Gesamtgewichts einen Vektor zwischen den vorhergehenden Schwerpunktkoordinaten und den neuen Schwerpunktkoordinaten ermittelt, und
dass der von der Steuereinheit (41) bestimmte Produktbereich (13, 14, 15) aus dem Vektor und dem Gesamtgewicht von der Steuereinheit (41) ermittelt wird.

8. Verkaufseinrichtung nach einem der Ansprüche 1 bis 7, **dadurch gekennzeichnet, dass** die Verkaufseinrichtung (10) eine erste Speichereinheit umfasst, in der entsprechende Produktinformationen den Produktbereichen im Auslagebereich zugeordnet sind.

9. Verkaufseinrichtung nach einem der Ansprüche 1 bis 8, **dadurch gekennzeichnet, dass** die Verkaufseinrichtung eine Kommunikationseinheit umfasst, die eine Nachricht schickt oder ausgibt, wenn der Warenbestand in einem Produktbereich einen dem Produktbereich zugeordneten Grenzwert unterschreitet.

10. Verfahren zum Betrieb einer Verkaufseinrichtung für insbesondere Backwaren, Obst oder Gemüse, **dadurch gekennzeichnet, dass** die Verkaufseinrichtung einen Auslagebereich umfasst, wobei der Auslagebereich durch einen starren Körper gebildet wird und wobei der Auslagebereich mindestens zwei räumlich getrennte Produktbereiche umfasst, und wobei der starre Körper des Auslagebereichs von den Krafteinleitungsbereichen von mindestens zwei Wägezellen gehalten wird, wobei das Verfahren folgende Schritte umfasst:

- empfangen eines Signals der mindestens zwei, vorzugsweise drei oder vier Wägezellen, wobei die Signale den Gewichtskräften im Bereich der Ecken des starren Körpers entsprechen,
- ermitteln mit einer Auswerteeinheit von Schwerpunktkoordinaten und einer Gesamtgewichtskraft aus den empfangenen Signalen,
- empfangen eines Signals das einer neuen Gewichtskraft entspricht von mindestens einer Wägezelle und ermitteln mit der Auswerteeinheit neuer Schwerpunktkoordinaten aus den von den Wägezellen aktuell empfangenen Daten
- ermitteln (63) eines Produktbereichs und eines Gewichts der aus dem Produktbereich entnommenen oder zugefügten Waren, und
- aktualisieren eines Warenbestands, der jedem Produktbereich zugewiesen ist.

11. Verfahren zum Betrieb einer Verkaufseinrichtung nach Anspruch 10, **dadurch gekennzeichnet, dass** es folgende Schritte umfasst:

- periodisches tarieren aller Wägezellen,
- bei einer Änderung des von mindestens einer Wägezelle gemessenen Gewichts, ermitteln von neuen Schwerpunktkoordinaten und eines neuen Gesamtgewichts mit den neuen Wägedaten.

12. Verfahren zum Betrieb einer Verkaufseinrichtung nach Anspruch 11, **dadurch gekennzeichnet, dass** es folgende Schritte umfasst:

- bei einer Änderung des von mindestens einer Wägezelle gemessenen Gewichts, ermitteln von neuen Schwerpunktkoordinaten mit den neuen Wägedaten,
- ermitteln eines Vektors zwischen den vorhergehenden Schwerpunktkoordinaten und den neuen Schwerpunktkoordinaten,
- zuordnen eines Produktbereichs ausgehend von dem ermittelten Vektor und dem Gesamtgewicht,
- bestimmen des Gewichts der entnommen oder zugefügten Waren aus dem zugeordneten Produktbereich,
- bestimmen einer Anzahl von Waren aufgrund des Gewichts der entnommenen oder zugefügten Waren und einem Gewicht pro Ware,
- aktualisieren eines Warenbestands in dem zugeordneten Produktbereich.

13. Verfahren zum Betrieb einer Verkaufseinrichtung nach Anspruch 12, **dadurch gekennzeichnet, dass** es folgende Schritte umfasst:

- vergleichen des aktualisierten Warenbestandes in dem zugeordneten Produktbereich mit einem für den Produktbereich definierten Grenzwert,
- senden oder anzeigen einer Information, dass der Grenzwert unterschritten ist, falls der aktualisierte Warenbestand den Grenzwert unterschreitet.

**Claims**

1. Sales device for baked goods, fruit or vegetables, in particular, consisting of at least one delivery area (12), wherein the delivery area (12) is formed by a rigid body (60), and wherein the delivery area (12) comprises at least two spatially separate product areas (13, 14, 15), **characterized in that** the rigid body of the delivery area (12) is held by the force introduction areas of at least two weighing cells (61, 62, 63, 64), and **in that** the sales device comprises an evaluation unit (65) which, at periodic intervals or in the event of a change in the total weight captured by the at least two weighing cells (61, 62, 63, 64), determines new centre of gravity coordinates from the data from the weighing cells (61, 62, 63, 64) and transmits said coordinates to a control unit (41), wherein the control unit (41) determines a product area (13, 14, 15) inside the delivery area (12) on the basis of changes in the centre of gravity coordinates, wherein the control unit (41) determines the weight of the goods removed from or added to the determined product area (13, 14, 15) from the change in the total weight and updates the inventory stored in a memory (44) for this product area (13, 14, 15).

2. Sales device according to Claim 1, **characterized in that** the sales device (10) is a sales device for self-service sales.

3. Sales device according to Claim 2, **characterized in that** the sales device (10) comprises three or four weighing cells (61, 62, 63, 64) which hold the rigid body of the delivery area (12).

4. Sales device according to one of Claims 1 to 3, **characterized in that** the control unit (41) determines a number of goods which have been removed or added from the total weight of the removed or added goods and an average weight for each goods item assigned to a product area (13, 14, 15).

5. Sales device according to one of Claims 1 to 4, **characterized in that** the control unit (41) updates an inventory inside each product area (13, 14, 15) on the basis of the removed or added goods.

6. Sales device according to one of Claims 1 to 4, **characterized in that** all weighing cells (61, 62, 63, 64) are tared periodically and at the same time.

7. Sales device according to one of Claims 1 to 6, **characterized in that** the evaluation unit (65) determines a vector between the previous centre of gravity coordinates and the new centre of gravity coordinates in the event of a change in the total weight, and
**in that** the product area (13, 14, 15) determined by the control unit (41) is determined by the control unit (41) from the vector and the total weight.

8. Sales device according to one of Claims 1 to 7, **characterized in that** the sales device (10) comprises a first storage unit in which corresponding product information is assigned to the product areas in the delivery area.

9. Sales device according to one of Claims 1 to 8, **characterized in that** the sales device comprises a communication unit which sends or outputs a message when the inventory in a product area undershoots a limit value assigned to the product area.

10. Method for operating a sales device for baked goods, fruit or vegetables, in particular, **characterized in that** the sales device comprises a delivery area, wherein the delivery area is formed by a rigid body, and wherein the delivery area comprises at least two spatially separate product areas, and wherein the rigid body of the delivery area is held by the force introduction areas of at least two weighing cells, wherein the method comprises the following steps of:

- receiving a signal from the at least two, preferably three or four, weighing cells, wherein the signals correspond to the weight forces in the region of the corners of the rigid body,
- determining centre of gravity coordinates and a total weight force from the received signals using an evaluation unit,
- receiving a signal corresponding to a new weight force from at least one weighing cell and determining new centre of gravity coordinates from the data currently received from the weighing cells using the evaluation unit,
- determining (63) a product area and a weight of the goods removed from or added to the product area, and
- updating an inventory assigned to each product area.

11. Method for operating a sales device according to Claim 10, **characterized in that** it comprises the following steps of:

- periodically taring all weighing cells,
- determining new centre of gravity coordinates and a new total weight using the new weighing data in the event of a change in the weight measured by at least one weighing cell.

12. Method for operating a sales device according to Claim 11, **characterized in that** it comprises the following steps of:

- determining new centre of gravity coordinates using the new weighing data in the event of a change in the weight measured by at least one weighing cell,
- determining a vector between the previous centre of gravity coordinates and the new centre of gravity coordinates,
- assigning a product area on the basis of the determined vector and the total weight,
- determining the weight of the goods removed from or added to the assigned product area,
- determining a number of goods on the basis of the weight of the removed or added goods and a weight for each goods item,
- updating an inventory in the assigned product area.

13. Method for operating a sales device according to Claim 12, **characterized in that** it comprises the following steps of:

- comparing the updated inventory in the assigned product area with a limit value defined for the product area,
- transmitting or displaying an item of information indicating that the limit value has been undershot if the updated inventory undershoots the limit value.


**Revendications**

1. Dispositif de vente, en particulier pour des pâtisseries, des fruits ou des légumes, composé d'au moins une zone de présentation (12), la zone de présentation (12) étant constituée par un corps rigide (60), et la zone de présentation (12) comprenant au moins deux zones de produits (13, 14, 15) séparées physiquement, **caractérisé en ce que** le corps rigide de la zone de présentation (12) est maintenu par les zones d'introduction de force d'au moins deux cellules de pesée (61, 62, 63, 64), et **en ce que** le dispositif de vente comprend une unité d'évaluation (65) qui détermine à intervalles périodiques ou en cas de modification du poids total, qui est détecté par les au moins deux cellules de pesée (61, 62, 63, 64), de nouvelles coordonnées de centre de gravité à partir des données des cellules de pesée (61, 62, 63, 64) et les transmet à une unité de commande (41), l'unité de commande (41) déterminant sur la base de modifications des coordonnées de centre de gravité une zone de produits (13, 14, 15) à l'intérieur de la zone de présentation (12), l'unité de commande (41) établissant, à partir de la modification du poids total, le poids des articles prélevés ou ajoutés dans la zone de produits (13, 14, 15) déterminée et mettant à jour l'inventaire stocké dans une mémoire (44) pour cette zone de produits (13, 14, 15).

2. Dispositif de vente selon la revendication 1, **caractérisé en ce que** le dispositif de vente (10) est un dispositif de vente pour la vente en libre service.

3. Dispositif de vente selon la revendication 2, **caractérisé en ce que** le dispositif de vente (10) comprend trois ou quatre cellules de pesée (61, 62, 63, 64) qui maintiennent le corps rigide de la zone de présentation (12).

4. Dispositif de vente selon l'une quelconque des revendications 1 à 3, **caractérisé en ce que** l'unité de commande (41) détermine à partir du poids total des articles prélevés ou ajoutés et d'un poids moyen par article, qui est associé à une zone de produits (13, 14, 15), un nombre d'articles qui ont été prélevés ou ajoutés.

5. Dispositif de vente selon l'une quelconque des revendications 1 à 4, **caractérisé en ce que** l'unité de commande (41) met à jour un inventaire à l'intérieur de chaque zone de produits (13, 14, 15) sur la base des articles prélevés ou ajoutés.

6. Dispositif de vente selon l'une quelconque des revendications 1 à 4, **caractérisé en ce que** toutes les cellules de pesée (61, 62, 63, 64) sont étalonnées périodiquement et en même temps.

7. Dispositif de vente selon l'une quelconque des revendications 1 à 6, **caractérisé en ce que** l'unité d'évaluation (65), en cas de modification du poids total, établit un vecteur entre les coordonnées de centre de gravité précédentes et les coordonnées de centre de gravité nouvelles, et **en ce que** la zone de produits (13, 14, 15) établie par l'unité de commande (41) est déterminée par l'unité de commande (41) à partir du vecteur et du poids total.

8. Dispositif de vente selon l'une quelconque des revendications 1 à 7, **caractérisé en ce que** le dispositif de vente (10) comprend une première unité de mémoire dans laquelle des informations de produit correspondantes sont associées aux zones de produits dans la zone de présentation.

**9.** Dispositif de vente selon l'une quelconque des revendications 1 à 8, **caractérisé en ce que** le dispositif de vente comprend une unité de communication qui envoie ou émet un message si l'inventaire dans une zone de produits passe en dessous d'une valeur limite associée à la zone de produits.

**10.** Procédé d'exploitation d'un dispositif de vente, en particulier pour des pâtisseries, des fruits ou des légumes, **caractérisé en ce que** le dispositif de vente comprend une zone de présentation, la zone de présentation étant constituée par un corps rigide et la zone de présentation comprenant au moins deux zones de produits séparées physiquement, et dans lequel le corps rigide de la zone de présentation est maintenu par les zones d'introduction de force d'au moins deux cellules de pesée, le procédé comprenant les étapes suivantes consistant à :

- recevoir un signal des au moins deux, de préférence trois ou quatre cellules de pesée, les signaux correspondant aux forces de gravité au niveau des coins du corps rigide,
- déterminer par une unité d'évaluation des coordonnées de centre de gravité et une force de gravité totale à partir des signaux reçus,
- recevoir un signal qui correspond à une nouvelle force de gravité d'au moins une cellule de pesée, et déterminer par l'unité d'évaluation de nouvelles coordonnées de centre de gravité à partir des données reçues actuellement depuis les cellules de pesée,
- déterminer (63) une zone de produits et un poids des articles prélevés ou ajoutés dans la zone de produits, et
- mettre à jour un inventaire qui est associé à chaque zone de produits.

**11.** Procédé d'exploitation d'un dispositif de vente selon la revendication 10, **caractérisé en ce qu'**il comprend les étapes suivantes consistant à :

- étalonner périodiquement toutes les cellules de pesée,
- en cas de modification du poids mesuré par au moins une cellule de pesée, déterminer de nouvelles coordonnées de centre de gravité et un nouveau poids total avec les nouvelles données de pesée.

**12.** Procédé d'exploitation d'un dispositif de vente selon la revendication 11, **caractérisé en ce qu'**il comprend les étapes suivantes consistant à :

- en cas de modification du poids mesuré par au moins une cellule de pesée, déterminer de nouvelles coordonnées de centre de gravité avec les nouvelles données de pesée,
- déterminer un vecteur entre les coordonnées de centre de gravité précédentes et les nouvelles coordonnées de centre de gravité,
- associer une zone de produits en partant du vecteur déterminé et du poids total,
- établir le poids des articles prélevés ou ajoutés dans la zone de produits associée,
- établir un nombre d'articles sur la base du poids des articles prélevés ou ajoutés et d'un poids par article,
- mettre à jour un inventaire dans la zone de produits associée.

**13.** Procédé d'exploitation d'un dispositif de vente selon la revendication 12, **caractérisé en ce qu'**il comprend les étapes suivantes consistant à :

- comparer l'inventaire mis à jour dans la zone de produits associée à une valeur limite définie pour la zone de produits,
- envoyer ou afficher une information indiquant que la valeur limite est dépassée si l'inventaire mis à jour passe en dessous de la valeur limite.

**Fig. 1**

**Fig. 2a**

**Fig. 2b**

**Fig. 3**

71

72

73

74

**Fig. 4**

81

82

83

84

85

86

87

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10045516 A1

- DE 102017001832 A1